# EUROPEAN PATENT APPLICATION

(11) **EP 3 792 648 A1**
(43) Date of publication of application: **17.03.2021**
(21) Application number: 19216298.0
(22) Date of filing: 13.12.2019
(51) Int. Cl.: G01S 3/30, G01S 5/02, G02B 27/00, G02B 27/01, G06F 3/01, G01S 1/68, G01S 3/48

(54) **LARGE AREA TRACKER WITH MILLIWAVE BORESIGHT CAPABILITY**

(30) Priority: 13.09.2019 US 201916570146
(71) Applicant: Rockwell Collins, Inc., Cedar Rapids, IA 52498 (US)
(72) Inventor: FOOTE, Bobby D., Marion, IA Iowa 52302 (US); WALKER, Anders P., Marion, IA Iowa 52302 (US); CROW, Jeffrey E., Cedar Rapids, IA Iowa 52402 (US); HAWK, Erin, Cedar Rapids, IA Iowa 52402 (US); BYERS, William J., Cedar Rapids, IA Iowa 52403 (US)
(74) Representative: Dehns

(57) **Abstract**

A helmet-mounted tracker (404) and boresighting system (100) incorporated paired receivers on opposing sides of the helmet worn by the user (214) (e.g., left/right, top/bottom) that receive a directional signal (412, 414) from directional transmitters (104, 106) placed at fixed locations throughout the target environment (e.g., a mobile platform (102), multilevel structure (202), or simulated environment). Each paired antenna (112a, 112b, 114a, 114b) generates an RF signal based on the received directional signal (412, 414); the paired RF signals are summed to determine the current alignment of the helmet (and head) to the directional transmitter (104, 106). Alignment information may be used to calibrate or correct inherent drift of the inertial measurement unit (IMU) of the helmet-mounted head tracker (404).

## Description

### TECHNICAL FIELD

Embodiments of the inventive concepts disclosed herein are directed generally to head-worn or helmet-worn display systems and more particularly to head-tracking systems compatible with said display systems.

### BACKGROUND

Head tracking systems provide precise head pose data (e.g., the position and orientation of the user's head at any given moment) to ensure that helmet-mounted displays, which move with the user's head, accurately reflect what the user should be seeing at that moment, in either a real-world or simulated environment. These systems may be bulky and thus impractical for helmet-mounted use. Further, head trackers generally incorporate inertial measurement units (IMU) which provide relative positioning information (e.g., relative to some reference position or frame) but are subject to inherent drift over time. As a result, head tracking systems may have a limited useful range. Finally, a large-area head tracker that receives positioning signals from remotely located transmitters may be detectable by other receivers within that area.

### SUMMARY

From a first aspect, there is provided a large-area boresighting system, comprising: at least one transmitter fixed to a reference frame and configured to transmit at least one directional signal via a transmitter (Tx) antenna; and at least one head-worn boresighting system worn on a head of a user, the boresighting system comprising: 1) at least one receiver pair including a first receiver and a second receiver worn respectively on a first side and an opposing side of the head, the first receiver configured to receive the directional signal via a first-side receiver (Rx) antenna and generate at least one first radio frequency (RF) signal based on the directional signal, and the second receiver configured to receive the directional signal via an opposing-side Rx antenna and generate at least one second RF signal based on the directional signal; and 2) at least one boresight processor communicatively coupled to the first receiver and to the second receiver, the boresight processor configured to generate at least one boresight signal based on the first and second RF signals associated with the directional signal, the boresight signal corresponding to an orientation of the head relative to the Tx antenna.

The large-area boresighting system may include directional transmitters fixed to a reference frame (e.g., attached to a vehicle or fixed within a structure). The directional transmitters may transmit high-frequency directional signals within a limited range. The large-area boresighting system may include head-worn (e.g., helmet-mounted) boresighting systems worn by users within the mobile platform or structure. The head-worn systems may include paired receivers on opposing sides of the embodying helmet (e.g., left-side and right-side receivers). The corresponding paired receivers may each receive the transmitted directional signals and generate an associated radio frequency (RF) signal. Helmet-mounted boresight processors may receive the paired RF signals and may generate boresight signals based on the orientation of the helmet (and the head of the user) relative to the directional transmitters as determined by the paired RF signals (e.g., received on the left and right sides). The boresight signals may be used for, e.g., calibration of a helmet-mounted head tracker system or adjustment of a helmet-mounted display configured for display of images and symbology to the user based on the correct orientation of the user's head relative to the mobile platform or structure.

From a second aspect, there is provided a head-worn tracker, comprising: at least one receiver pair including a first receiver and a second receiver worn respectively on a first side and an opposing side of a head of a user, the first receiver configured to receive a directional signal via a first-side receiver (Rx) antenna and generate at least one first radio frequency (RF) signal based on the directional signal and the second receiver configured to receive the directional signal via an opposing-side Rx antenna and generate at least one second RF signal based on the directional signal; at least one inertial measurement unit (IMü) configured to generate estimated pose data relative to a reference frame, the pose data including at least one of a position of the head and an orientation of the head; and at least one boresight processor in communication with the receiver pair and the IMU, the boresight processor configured to: receive the first and second RF signals; generate boresight data based on the first and second RF signals; and generate an estimated head pose relative to the reference frame by updating the estimated pose data based on the boresight data.

The head-worn tracker may include paired receivers on opposing sides of the embodying helmet (e.g., left-side and right-side receivers). The corresponding paired receivers may each receive transmitted directional signals (e.g., millimeter-wave signals of limited range) and may generate paired radio frequency (RF) signal based on the directional signals. The head-worn trackers may include inertial measurement units (IMU; e.g., accelerometers, gyrometers, or other relative position sensors) for generating estimated head pose data (e.g., a position and orientation of the user's head) relative to a reference frame (e.g., to the earth frame or to a vehicle or mobile platform). The head-worn trackers may include boresight processors for receiving the paired RF signals from the receivers on each side, may generate boresighting data therefrom, and may update the estimated head pose (e.g., correcting or calibrating the head tracker) based on the boresighting data.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic overhead view illustrating a large-area boresighting system;
FIG. 2 is a diagrammatic profile view illustrating a structure-based implementation of the large-area boresighting system of FIG. 1;
FIG. 3 is an isometric illustration of a helmet-mounted tracker of the large-area boresighting system of FIG. 1;
and FIGS. 4A and 4B are diagrammatic overhead illustrations of the helmet-mounted tracker of FIG. 3.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to a large-area boresighting system capable of supporting multiple users within a real-world or simulated environment such as a ship or other mobile platform or a multilevel/multi-room structure. The head tracker systems are accurate yet neither excessively heavy or cumbersome. Further, the boresighting system allows high mobility throughout the environment for helmet-wearing users, but is undetectable beyond the mobile platform or environment.

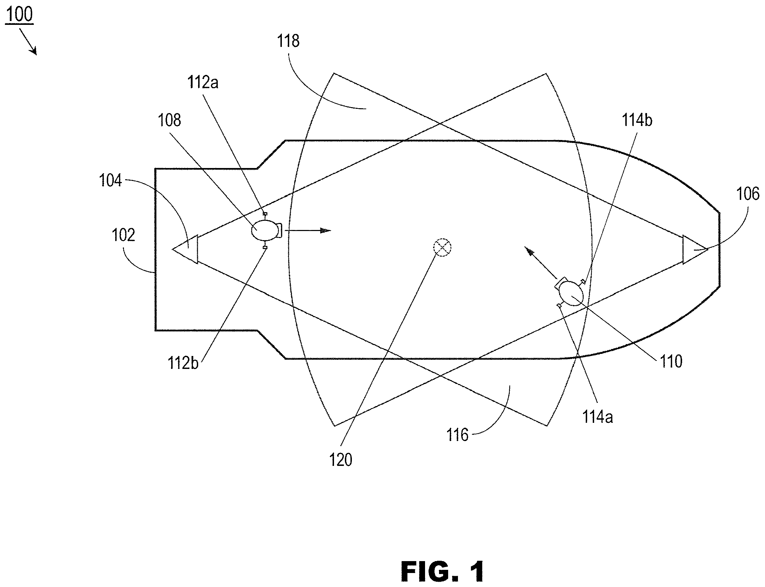

Referring to FIG. 1, a large-area boresighting system 100 is disclosed. The large-area boresighting system 100 may be implemented aboard a ship 102 or other mobile platform (e.g., a water-based, ground-based vehicle, airborne vehicle) and may include directional transmitters 104, 106 and helmet-mounted display (HMD) systems 108, 110 compatible therewith and worn by individual users aboard the ship 102.

In embodiments, the large-area boresighting system 100 may be compatible with the HMD systems 108, 110 throughout the ship 102 (e.g., providing a position/orientation (pose) reference for head tracker systems incorporated within each individual HMD system) but undetectable beyond the ship 102. For example, the aft and forward directional transmitters 104, 106 (e.g., the aft directional transmitter 104 may be mounted aft of the ship 102 but oriented in a generally forward direction) may each generate and transmit a directional signal, e.g., a substantially 60 GHz millimeter-wave (milliwave; more generally Extremely High Frequency (EHF) signals between 30-300 GHz) signal, via directional antenna elements. Each HMD system 108, 110 may include paired receiver antennas (112a-b, 114a-b) on opposing sides (e.g., left-side antennas 112a, 114a; right-side antennas 112b, 114b) of the helmet to which the HMD system components are mounted.

Regardless of their positions on the ship 102 (e.g., while moving throughout the ship), the users/wearers of the HMD systems 108, 110 may continually receive (e.g., via the paired receiver antennas 112a-b, 114a-b) the transmitted directional signals so long as the users are within range (116, 118) or the respective forward and aft directional transmitters 104, 106. For example, the HMD system 108 may, while within the range 116 of the aft directional transmitter 104, receive the directional signals transmitted thereby via the left-side and right-side antennas 112a-b, each antenna producing its own radio frequency (RF) signal based on the received directional signal. The HMD system 108 may sum the RF signals received by the left-side and right-side antennas 112a-b (e.g., based on a common directional signal from the aft directional transmitter 104) to determine an alignment or orientation of the HMD system relative to the aft directional transmitter. Similarly, if the HMD system 108 is within the range 118 of the forward directional transmitter 106, the left-side and right-side antennas 112a-b may also receive directional signals transmitted thereby, generating an additional pair of RF signals via the left-side and right-side antennas and determining the current alignment of the HMD system 108 relative to the forward directional transmitter 106.

In embodiments, the aft and forward directional transmitters 104, 106 may each be aligned to the ship 102 (e.g., based on the reference frame or relative position of the ship), allowing each HMD system 108, 110 to determine its position or orientation (e.g., pose) relative to the ship. Multiple directional transmitters may be positioned throughout the ship 102 such that the HMD systems 108, 110 may track their relative orientations at any location within the ship via at least one directional transmitter. However, the placement of the aft and forward directional transmitters 104, 106 (and any other directional transmitters deployed throughout the ship) may be such that the range 116, 118 of any directional transmitter does not extend significantly beyond the ship 102. Accordingly, the large-area boresighting system 100 may be used in conjunction with HMD systems 108, 110 throughout the ship 102 but undetectable outside the ship. In some embodiments, the large-area boresighting system 100 may be operable as a short-range tracker system within the range of the directional transmitters 104, 106.

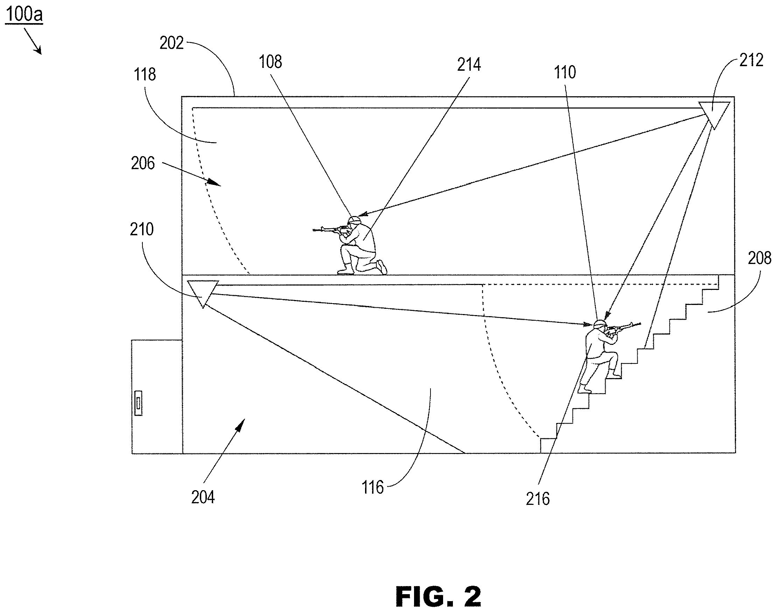

Referring now to FIG. 2, the large-area boresighting system 100a may be implemented and may function similarly to the large-area boresighting system 100 of FIG. 1, except that the large-area boresighting system 100a may be deployed within a real or simulated building or multilevel structure 202 (e.g., in conjunction with a large-scale simulator incorporating multiple rooms, levels (e.g., lower level 204, upper level 206), and stairwells 208.

In embodiments, the large-area boresighting system 100a may deploy directional transmitters 210, 212 throughout the real or simulated structure 202 to provide full coverage of the upper and lower levels 204, 206 and stairwell 208. Accordingly, users/wearers 214, 216 of the HMD systems 108, 110 may receive directional signals from the directional transmitters 210, 212 and thereby determine (e.g., via the RF signals generated by the left-side and right-side antennas (112a-b, 114a-b; FIG. 1)) the current orientation of the HMD systems relative to one or more directional transmitters.

In embodiments, the directional transmitters 210, 212 may be implemented and may function similarly to the directional transmitters 104, 106 of FIG. 1, except that the directional transmitters 210, 212 may be aligned to an earth frame, or to an absolute positioning system (e.g., GPS or any appropriate similar satellite-based navigation system).

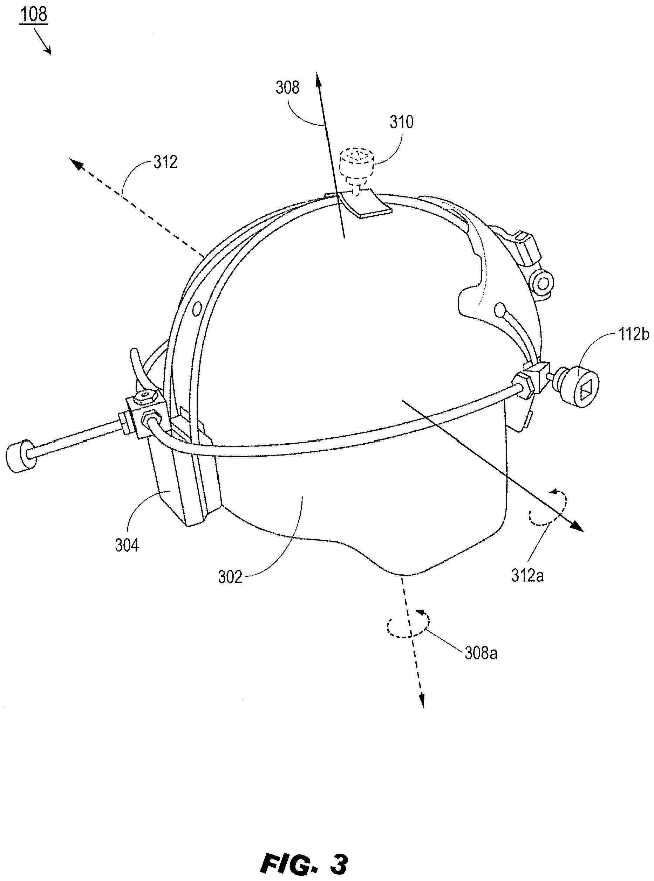

Referring to FIG. 3, in embodiments the HMD system 108 may be implemented via a helmet 302 worn by the user 214 (FIG. 2). The helmet 302 may incorporate rear-mounted system components 304 including, e.g., a head tracker (e.g., magnetic tracker, optical tracker) including one or more inertial measurement units (IMU; e.g., accelerometer, gyrometer, compass, magnetometer, camera/fiducials, or other inertial sensor capable of multiple degrees of freedom) capable of determining an estimated head pose, e.g., an estimated position and orientation of the head of the user 214. This estimated head pose may be relative to some established reference frame (e.g., earth frame) or to some fixed and known absolute position. However, as the user 214 moves throughout the real or simulated structure 202 (FIG. 2) or about the ship 102 (FIG. 1), the accuracy of the estimated head pose generated by the HMD systems 108, 110 may deteriorate due to cumulative inherent drift of the IMU.

In embodiments, the helmet 302 may incorporate a right-side antenna 112b and left-side antenna (112a, FIG. 1) for receiving directional signals from the directional transmitters (210, 212; FIG. 2). The system components 304 may include boresight processors for analyzing the RF signals produced by the left-side and right-side antennas 112a-b upon receipt of a directional signal from the directional transmitters 210, 212 and generating a boresight signal for updating or calibrating the head tracker. For example, an estimated head pose generated by the head tracker may be corrected based on the boresight signal to cancel out inherent drift on the part of the IMU.

In embodiments, due to the placement of the left-side and right-side antennas 112a-b on the left and right sides of the helmet 302 respectively, the boresight signal generated by the boresight processors based on the RF signals produced by the left-side and right-side antennas 112a-b may determine an alignment of the helmet (and therefore the head of the user 214) relative to a z-axis 308 (e.g., vertical axis, yaw axis) around which the head may rotate substantially left or right (308a; e.g., counterclockwise or clockwise). In embodiments, the HMD system 108 may incorporate additional paired antennas (310) disposed, e.g., on top and bottom sides of the helmet 302 respectively for determination, based on RF signals produced by the paired antennas upon receipt of directional signals from the directional transmitters 210, 212, of an alignment or orientation of the head relative to an x-axis 312 (e.g., horizontal axis, pitch axis), around which the head may rotate substantially up or down (312a).

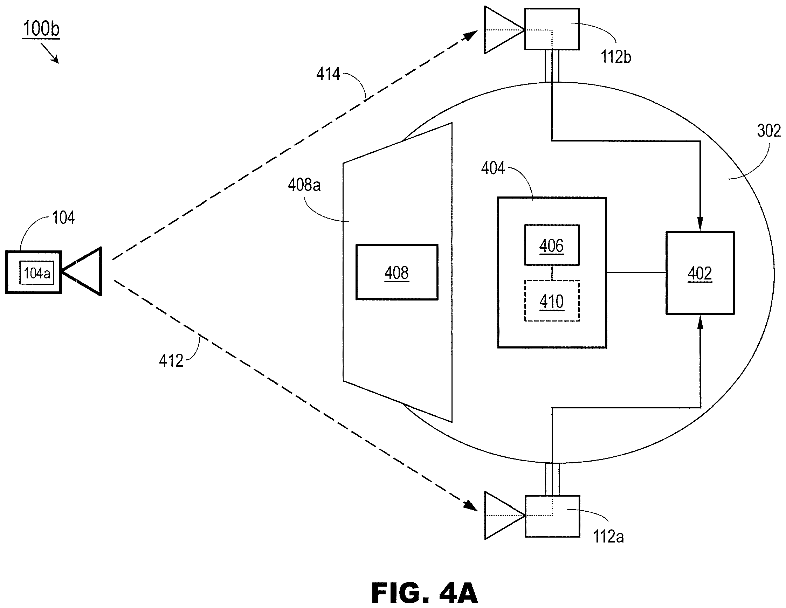

Referring to FIG. 4A, the large-area boresighting system 100b may be implemented and may function similarly to the large-area boresighting systems 100, 100a of FIGS. 1 and 2, except that the large-area boresighting system 100b may additionally incorporate, in addition to the left-side and right-side antennas 112a-b and boresight processors 402 mounted to the helmet 302 and the head tracker 404 (including IMU 406) incorporated thereinto, a display system 408.

In embodiments, the display system 408 may include a display surface, e.g., an interior surface of a visor 408a of the helmet 302, upon which the HMD system 108 may display images to the user (214, FIG. 2) based on the estimated head pose determined by the head tracker 404. For example, the display system 408 may display to the user 214 a visual simulation of an environment (e.g., a simulation of the ship 102 of FIG. 1 or the structure 202 of FIG. 2) reactive to the motions and actions of the user 214. When the user 214 rotates his/her head, the view projected onto the visor 408a may shift to reflect this rotation. In addition, the display system 408 may generate symbology and superimpose the generated symbols on the visual simulation to enhance the simulated environment, e.g., to provide directional or environmental information to the user 214 or alert the user to the presence or actions of other users (216, FIG. 2) within the simulated environment. When a directional signal 412, 414 is transmitted by the directional transmitter 104 and received respectively by the left-side and right-side antennas 112a-b, and a boresight signal generated by the boresight processors 402 based on the RF signals produced by the left-side and right-side antennas 112a-b, the boresight signal may be used to calibrate or correct the head tracker 404 (which may include tracking processors 410). The display system 408 may update the images and symbology displayed to the user 214 via the visor 408a based on the boresight signal or the corrected head pose data generated by the head tracker 404 (e.g., estimated head pose data generated by the IMU 406 and corrected by the boresight signal), indicating as precisely as possible what the user 214 should be seeing based on their current position or orientation relative to the directional transmitter 104.

In some embodiments, the directional signals 412, 414 transmitted by the directional transmitter 104 may include additional position information encoded into the signal and decoded by the boresight processors 402. For example, the directional signals 412, 414 may include a platform-based inertial correction (e.g., for boresighting systems having a mobile platform-based reference frame), an absolute position solution (e.g., a GPS-derived absolute position or similar satellite-based navigational solution), a relative position solution (e.g., from a reference IMU), or a unique identifier of the directional transmitter (differentiating the directional signals 412, 414 from those transmitted by other directional transmitters (106, FIG. 1) within the physical or simulated environment (e.g., the mobile platform 102, FIG. 1). The boresight processors 402, head tracker 404, and display system 408 may use this additional information to more precisely determine the pose data of the head of the user 214, and the corresponding imagery and symbology displayed to the user via the visor 408a based on the pose data.

In some embodiments, the directional transmitters 104 may include control processors (104a) configured for automatic control of directional signal gain levels, e.g., for increasing or decreasing the strength of the directional signals 412, 414 as needed to optimize performance in a variety of different real or simulated environments. In some embodiments, the control processors 104a may (e.g., in response to operator input) adjust the frequency of the directional signals 412, 414 via the directional transmitter 104 in order to restrict the range of the transmitted directional signals to or near the vicinity of a particular mobile platform 102 or structure (202, FIG. 2), such that transmissions cannot be received or detected beyond said limited range, rendering the large-area boresighting system 100b undetectable outside the desired range.

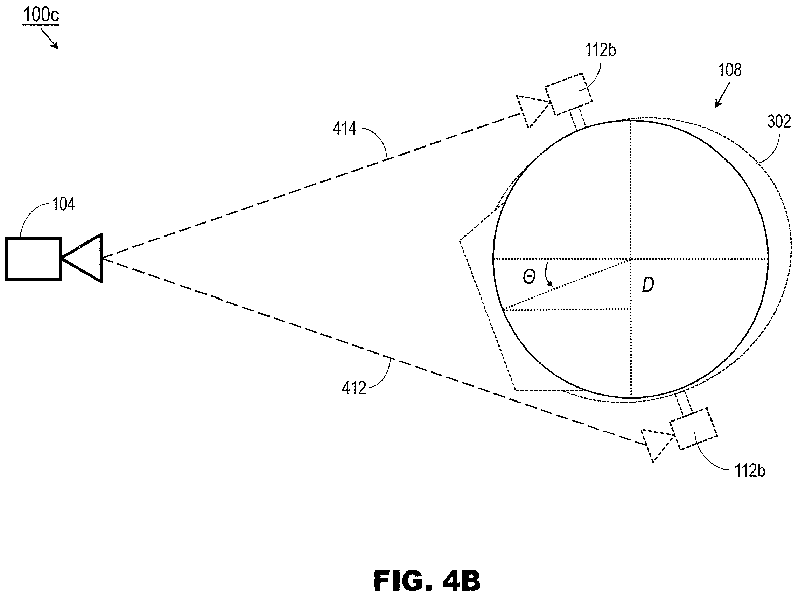

Referring to FIG. 4B, the large-area boresighting system 100c may be implemented and may function similarly to the large-area boresighting system 100b of FIG. 4A, except that the large-area boresighting system 100c may register a change in orientation of the HMD system 108 mounted to the helmet 302 based on the directional signals 412, 414 respectively received by the left-side and right-side antennas 112a-b. For example, if the helmet 302 is oriented such that the left-side and right-side antennas 112a-b are precisely equidistant from the directional transmitter 104 (as shown by FIG. 4A), the directional signals 412, 414 may cancel each other out precisely.

In embodiments, the directional signals 412, 414 may respectively differ slightly in phase; e.g., the substantially 60 GHz directional signals 412, 414 may be received by the left-side and right-side antennas 112a-b at respectively 90 degrees and 270 degrees of phase. When the head (and therefore the helmet 302) rotates (e.g., relative to the z-axis 308, FIG. 3), the HMD system 108 (in particular the boresight processors 402, FIG. 4A) may determine the orientation of the helmet 302 (and thus the head) at any given moment by tracking voltage changes associated with the phase differences of the received directional signals 412, 414 due to deflection in the direction of the source (e.g., directional transmitter 104) on the part of the left-side and right-side antennas 112a-b (as reflected by the RF signals produced by the left-side and right-side antennas).

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A large-area boresighting system (100), comprising:
at least one transmitter (104, 106) fixed to a reference frame and configured to transmit at least one directional signal (412, 414) via a transmitter (Tx) antenna;
and
at least one head-worn boresighting system (108, 110) worn on a head of a user (214), the boresighting system comprising:
1) at least one receiver pair including a first receiver and a second receiver worn respectively on a first side and an opposing side of the head,
the first receiver configured to receive the directional signal via a first-side receiver (Rx) antenna (112a, 114a) and generate at least one first radio frequency (RF) signal based on the directional signal,
and
the second receiver configured to receive the directional signal via an opposing-side Rx antenna (112b; 114b) and generate at least one second RF signal based on the directional signal;
and
2) at least one boresight processor (402) communicatively coupled to the first receiver and to the second receiver, the boresight processor configured to generate at least one boresight signal based on the first and second RF signals associated with the directional signal, the boresight signal corresponding to an orientation of the head relative to the Tx antenna.

2. The large-area boresighting system of claim 1, wherein:
the at least one transmitter is fixed to a mobile platform (102);
and
the reference frame corresponds to the mobile platform.

3. The large-area boresighting system of claim 1, wherein:
the at least one transmitter is fixed either to or within a structure;
and
the reference frame is an earth frame.

4. The large-area boresighting system of claim 1, 2 or 3, wherein the at least one receiver pair includes:
a first receiver pair corresponding to a first rotational axis of the head;
and
at least one second receiver pair corresponding to a second rotational axis of the head.

5. The large-area boresighting system of any preceding claim, further comprising:
a head tracker (404) worn on the head and communicatively coupled to the boresight processor, the head tracker comprising:
at least one inertial measurement unit (IMU) configured to generate estimated pose data, the pose data including at least one of a relative position of the head and a relative orientation of the head;
and
at least one tracker processor (410) in communication with the boresight processor, the tracker processor configured to:
receive the at least one boresight signal;
and
generate an estimated head pose relative to the reference frame by updating the estimated pose data based on the received boresight signal.

6. The large-area boresighting system of claim 5, wherein the at least one tracker processor is configured to calibrate the head tracker based on the boresight signal.

7. The large-area boresighting system of claim 5 or 6, further comprising:
a display system (408) worn on the head, the display system comprising:
at least one image sensor configured to capture one or more images;
at least one display surface (408a) configured to display the captured images to the user (214);
and
at least one display processor communicatively coupled to the head tracker (404), the display processor configured to:
generate symbology based on one or more of the captured images and the estimated head pose;
superimpose the generated symbology over the displayed captured images;
and
adjust one or more of the captured images and the generated symbology based on at least one of the boresight signal and the estimated head pose.

8. The large-area boresighting system of claim 7, wherein:
at least one of the directional signal, the first RF signal, and the second RF signal includes encoded position information;
the boresight processor (402) is configured to 1) decode the encoded position information and 2) adjust the boresight signal based on the decoded position information;
and
the display processor is configured to adjust one or more of the captured images and the generated symbology based on the decoded position information.

9. The large-area boresighting system of claim 8, wherein **:**
the decoded position information includes at least one of a platform inertial correction, an absolute position solution, a relative position solution, and an identifier corresponding to the transmitter (104, 106).

10. The large-area boresighting system of any preceding claim, wherein the at least one transmitter (104, 106) includes at least one control processor (104a) configured to control at least one gain level of the directional signal, optionally wherein:
the at least one transmitter is fixed to either a mobile platform (102) or a structure;
and
the control processor is configured to restrict a range of the at least one transmitter within the mobile platform or the structure.

11. A head-worn tracker (404), comprising:
at least one receiver pair including a first receiver and a second receiver worn respectively on a first side and an opposing side of a head of a user (214), the first receiver configured to receive a directional signal (412, 414) via a first-side receiver (Rx) antenna (112a, 114a) and generate at least one first radio frequency (RF) signal based on the directional signal and the second receiver configured to receive the directional signal via an opposing-side Rx antenna (112b, 114b) and generate at least one second RF signal based on the directional signal;
at least one inertial measurement unit (IMU) configured to generate estimated pose data relative to a reference frame, the pose data including at least one of a position of the head and an orientation of the head;
and
at least one boresight processor (402) in communication with the receiver pair and the IMU, the boresight processor configured to:
receive the first and second RF signals;
generate boresight data based on the first and second RF signals;
and
generate an estimated head pose relative to the reference frame by updating the estimated pose data based on the boresight data.

12. The head-worn tracker of claim 11, wherein:
the at least one receiver pair is configured to receive at least a first directional signal originating from a first transmitter and at least one second directional signal originating from a second transmitter;
and
the estimated head pose includes at least one of a first position of the head relative to the first transmitter and at least one second position of the head relative to the second transmitter.

13. The head-worn tracker of claim 11 or 12, wherein the at least one receiver pair includes:
a first receiver pair corresponding to a first rotational axis of the head;
and
at least one second receiver pair corresponding to a second rotational axis of the head.

14. The head-worn tracker of claim 11, 12 or 13, further comprising:
a display system (408) worn on the head and in communication with the boresight processor, the display system comprising:
at least one image sensor configured to capture one or more images;
at least one display surface (408a) proximate to at least one eye of the user (214), the display surface configured to display the one or more captured images to the user;
and
at least one display processor communicatively coupled to the head tracker (404), the display processor configured to:
generate symbology based on one or more of the captured images and the estimated head pose;
superimpose the generated symbology over the displayed captured images;
and
adjust one or more of the captured images and the generated symbology based on at least one of the boresight data and the estimated head pose.

15. The head-worn tracker of claim 14, wherein the boresight data includes decoded position information based on at least one of the first RF signal and the second RF signal, the decoded position information including at least one of a platform inertial correction, an absolute position solution, a relative position solution, and an identifier corresponding to the transmitter.
